# EUROPÄISCHE PATENTSCHRIFT

(11) **EP 4 509 219 B1**
(45) Veröffentlichungstag und Bekanntmachung des Hinweises auf die Patenterteilung: **28.05.2025**
(21) Anmeldenummer: 23192189.1
(22) Anmeldetag: 18.08.2023
(51) Int. Cl.: B05B 13/02, B21D 11/10, B21D 43/00, B21D 43/28, B21F 1/00, B21F 7/00, B21F 11/00

(54) **BESTÜCKUNGSVORRICHTUNG FÜR EINE BESCHICHTUNGSANLAGE SOWIE BESCHICHTUNGSANLAGE**
MOUNTING DEVICE FOR A COATING INSTALLATION AND COATING INSTALLATION
DISPOSITIF DE GARNISSAGE POUR UNE INSTALLATION DE REVÊTEMENT ET INSTALLATION DE REVÊTEMENT

(43) Veröffentlichungstag der Anmeldung: 19.02.2025
(73) Patentinhaber: Schwäbische Werkzeugmaschinen GmbH, 78713 Schramberg-Waldmössingen (DE)
(72) Erfinder: Rocker, Hartmut, 88069 Tettnang (DE)
(74) Vertreter: Schorr, Peter Karl

(56) Entgegenhaltungen:
- CN-A- 111 036 473
- CN-A- 112 692 189
- KR-B1- 101 924 561
- US-A- 4 243 146
- US-A- 5 769 949

## Beschreibung

Die Erfindung betrifft eine Bestückungsvorrichtung für eine Beschichtungsanlage sowie eine Beschichtungsanlage.

Zum Beschichten von Teilen, insbesondere von Werkstücken, mit einem Beschichtungsmittel, wie Lack oder Farbe, werden Beschichtungsanlagen verwendet. In diesen werden die Werkstücke mit dem Beschichtungsmittel besprüht und im Anschluss in einer Wärmeeinheit, wie Ofen, ausgehärtet.

Bei den bekannten Beschichtungsanlagen werden mehrere Werkstücke an Trägern einer Halteeinheit angeordnet und die derart bestückte Halteeinheit einem Fördersystem übergeben, durch das die Werkstücke der Beschichtungseinheit und anschließend der Wärmeeinheit, zugeführt werden. Nach dem Aushärten der Beschichtung an den Werkstücken, wird die Halteeinheit einer Entladeeinrichtung zugeführt, an der die Halteeinheit vom Fördersystem entfernt wird und anschließend die Werkstücke von der Halteeinheit entnommen werden.

Es hat sich als nachteilig herausgestellt, dass es durch das Beschichten der Werkstücke mit Schichtmittel nie ganz vermieden werden kann, dass auch Komponenten der Halteeinheit mit dem Schichtmittel beschichtet werden und vor einem erneuten Einsatz gereinigt werden müssen.

Dieses erweist sich insbesondere dann als besonders nachteilig, wenn die Beschichtungsanlage derart aufgebaut ist, dass die Werkstücke durch die Halteeinheit beim Beschichten elektrisch bestromt werden, um ein Anhaften des Schichtmittels zu verbessern. Solchenfalls ist es nachteilig, wenn die Halteeinheit zunehmend mit dem Schichtmittel beschichtet und dadurch elektrisch isoliert ist. Dann ist ein Leiten von elektrischem Strom durch die Halteeinheit an die Werkstücke aufgrund der zunehmenden isolierenden Wirkung des Schichtmittels, unterbunden oder zumindest reduziert.

Ein Reinigen der einzelnen Komponenten der Halteeinrichtung erweist sich als umständlich, zeitintensiv und hierdurch als kostenintensiv. Um Kosten zu sparen, sind aus dem Stand der Technik Beschichtungsanlagen bekannt, bei denen die Halteeinrichtungen drahtartige Haken umfassen, die an den Trägern der Halteeinrichtung eingehängt werden und an denen jeweils ein Werkstück eingehängt wird. Nach einem Beschichtungsdurchgang werden die beschichteten Drahthaken entsorgt und durch neue Drahthaken ersetzt. Das Anordnen der Drahthaken an den Trägern sowie das Anordnen der Werkstücke an den Drahthaken erweis sich als zeitaufwändig.

Bestückungsvorrichtungen für eine Beschichtungsanlage mit mindestens einer Halteeinrichtung, die mindestens einen gestellartigen Rahmen und mindestens einen aus einem stangen- oder drahtartigen Endlos-Material gefertigten Träger umfasst, der mit einem Ende am Rahmen festlegbar oder festgelegt ist und an dem mindestens ein hakenartiger Halteabschnitt ausgeformt ist, an dem ein zu bearbeitendes Werkstück anordenbar ist, sind bekannt aus US 4 243 146 A und US 5 769 949 A.

Eine Bereitstellungseinrichtung, durch die ein Träger herstellbar ist, die einen Endlos-Materialträger, der das den Träger bildende Endlos-Material bereitstellt, die eine Verformungseinheit, durch die ein hakenartiger Halteabschnitt durch ein bereichsweises plastisches Verformen des bereitgestellten Endlos-Materials formbar ist, und die ein Ablängmittel umfasst, durch das das bereitgestellte Endlos-Material vom verbleibenden Endlos-Materialträger trennbar ist, ist bekannt aus CN 112 692 189 A.

Eine Aufgabe eines Ausführungsbeispiels der Erfindung ist, eine Bestückungsvorrichtung sowie eine Beschichtungsanlage vorzuschlagen, bei der ein Anordnen von Werkstücken an einer Halteeinrichtung effizienter gestaltbar ist.

Diese Aufgabe wird gelöst durch eine Bestückungsvorrichtung für eine Beschichtungsanlage mit mindestens einer Halteeinrichtung, die mindestens einen gestellartigen Rahmen und mindestens einen aus einem stangen- oder drahtartigen Endlos-Material gefertigten Träger umfasst, der mit einem Ende am Rahmen festlegbar oder festgelegt ist und an dem mindestens ein hakenartiger Halteabschnitt ausgeformt ist, an dem ein zu bearbeitendes Werkstück anordenbar ist, mit mindestens einer Erfassungseinrichtung, die ein Erfassungsmittel, durch das zumindest die Abmaße des Rahmens und des Werkstücks erfassbar sind, und die mindestens eine Steuereinheit umfasst, durch die auf Grundlage der Abmaße des Rahmens und des Werkstücks die Abmaße des mindestens einen hakenartigen Halteabschnitts und eines Mindestabstands zweier hakenartiger Halteabschnitte des Trägers zum berührungsfreien Anordnen des Werkstücks sowie durch die die Gesamtlänge des Endlos-Materials zum Ausformen des Trägers ermittelbar ist, und mit mindestens einer mit der Erfassungseinrichtung funktional zusammenwirkenden Bereitstellungseinrichtung, durch die der Träger herstellbar ist, die einen Endlos-Materialträger, der das den Träger bildende Endlos-Material bereitstellt, die eine Verformungseinheit, durch die ein hakenartiger Halteabschnitt durch ein bereichsweises plastisches Verformen des bereitgestellten Endlos-Materials nach Maßgabe der ermittelten Abmaße und des ermittelten Mindestabstands formbar ist, und die ein Ablängmittel umfasst, durch das das bereitgestellte Endlos-Material mit Erreichen der Gesamtlänge vom verbleibenden Endlos-Materialträger trennbar ist.

Dadurch, dass die Bestückungsvorrichtung eine Bereitstellungseinrichtung umfasst, in der der Träger und die hakenartigen Halteabschnitte aus einem Endlos-Material auf Grundlage der durch das Erfassungsmittel erfassten Daten bereitgestellt werden können, ist ein Bestückungsvorgang effizienter gestaltbar. Insbesondere können auf die aus dem Stand der Technik bekannten Drahthaken und deren Anordnung am Träger verzichtet werden, wodurch Zeit einsparbar ist.

Dadurch, dass die Bestückungsvorrichtung eine Erfassungseinrichtung umfasst, mit der die Abmaße des Rahmens und des Werkstücks erfassbar sind, können die Träger in der Bereitstellungseinrichtung optimiert angepasst werden. Hierdurch ist es möglich, den Träger und die darin vorgesehenen hakenartigen Halteabschnitte jeweils maßgeschneidert an das jeweilige Werkstück anzupassen. Hierdurch ist eine raum- und platzoptimierte Nutzung der Halteeinrichtung verbessert, wodurch die Anzahl der zu bearbeiteten Werkstücke, insbesondere der zu beschichtenden Werkstücke, optimiert sein kann.

Unter der Gesamtlänge des vom Endlos-Material abgetrennten und den Träger bildenden Endlos-Materials wird die Länge verstanden, die für das Ausbilden der reinen Trägerabschnitte sowie der hakenartigen Halteabschnitte benötigt wird.

Grundsätzlich ist es denkbar, dass die hakenartigen Halteabschnitte aus dem Endlos-Material Träger abgelängt werden und als zusätzliche, separate Bauteile am Träger festgelegt werden. Es wird jedoch eine Ausführungsform der Bestückungsvorrichtung bevorzugt, bei der der Träger und der mindestens eine hakenartige Halteabschnitt ein gemeinsames einstückiges Bauteil bilden.

Die Verformungseinheit lässt sich grundsätzlich technisch beliebig ausbilden, sofern durch diese der hakenförmige Halteabschnitt bereitstellbar ist. Bei einer Ausführungsform der Bestückungsvorrichtung ist vorgesehen, dass die mindestens eine Verformungseinheit der Bereitstellungseinrichtung ein Anlagemittel umfasst, das parallel zur Erstreckungsrichtung des bereitgestellten Endlos-Materials angeordnet ist und das eine durchgehende Öffnung umfasst, und dass die mindestens eine Verformungseinheit der Bereitstellungseinrichtung ein Zugmittel umfasst, das das bereitgestellte Endlos-Materials auf einer dem Anlagemittel abgewandten Seite hintergreift und quer oder schräg zur Erstreckungsrichtung des bereitgestellten Endlos-Materials den zu bildenden hakenartigen Halteabschnitt durch die Öffnung überführt.

Wenn die Verformungseinheit der Bereitstellungseinrichtung ein Anlagemittel umfasst, durch dessen Öffnung ein Bereich des Endlos-Materials hindurchsteckbar ist, kann dieser hindurchgesteckte Bereich verformt werden, ohne dass die weiteren, insbesondere angrenzenden, Bereiche des Endlos-Materials verformt werden.

Bei einer Weiterbildung letztgenannter Ausführungsform erweist es sich als vorteilhaft, wenn die mindestens eine Verformungseinheit der Bereitstellungseinrichtung mindestens ein Verdrillungsmittel umfasst, durch das der durch die Öffnung des Anlagemittels überführte zu bildende hakenartige Halteabschnitt durch Verdrillen plastische verformbar ist und/oder wenn die mindestens eine Verformungseinheit der Bereitstellungseinrichtung mindestens ein Biegemittel umfasst, durch das der durch die Öffnung des Anlagemittels überführte zu bildende hakenartige Halteabschnitt durch Biegen verformbar ist.

Wenn die Verformungseinheit der Bereitstellungseinrichtung mindestens ein Verdrillungsmittel umfasst, kann das Endlos-Material zum Bilden des hakenartigen Halteabschnitts verdrillt werden. Hierdurch kann die Biegesteifigkeit des hakenartigen Halteabschnitts gesteigert werden, wodurch Werkstücke mit höherem Gewicht am hakenartigen Halteabschnitt anordenbar sind, ohne diesen plastisch zu verformen.

Wenn die Verformungseinheit ein Biegemittel umfasst, kann der hakenartige Halteabschnitt durch Biegen verformt werden, wodurch ein Werkstück, dass beispielsweise eine durch eine durchgehende Öffnung gebildete Aufnahme umfasst, einen Hintergriff bildend, an einem hakenartigen Halteabschnitt anordenbar ist. Hierdurch kann gewährleistet werden, dass das Werkstück beim Bewegen der Halteeinrichtung nicht unbeabsichtigt vom hakenartigen Abschnitt entfernbar ist.

Die Anordnung des Trägers am Rahmen kann grundsätzlich beliebig erfolgen. Es sind Ausführungsformen der Bestückungsvorrichtung denkbar, bei denen mindestens einer des mindestens einen am Träger ausgeformten hakenartigen Halteabschnitts in der am Rahmen festgelegten Anordnung des Trägers einen horizontalen Bereich, der in den Träger mündet, und einen vertikalen Bereich umfasst, der in den horizontalen Bereich mündet und auf der dem horizontalen Bereich abgewandten Seite ein freies Ende zum Anordnen des Werkstücks aufweist, wobei der hakenartige Halteabschnitt sowohl mit dem horizontalen Bereich als auch mit dem vertikalen Bereich parallel zu einer durch den Rahmen aufgespannten Ebene verlaufend angeordnet ist, oder wobei der hakenartige Halteabschnitt mit dem horizontalen Bereich oder mit dem vertikalen Bereich senkrecht zu einer durch den Rahmen aufgespannten Ebene verlaufend angeordnet ist.

Wenn die hakenartigen Halteabschnitte derart ausgebildet sind, dass sie mit ihrem horizontalen Bereich und vertikalen Bereich in der Ebene des Rahmens verlaufen, sind an den hakenartigen Halteabschnitten angeordnete Werkstücke derart anordenbar, dass diese mit größten Oberflächen quer zur Ebene des Rahmens verlaufen. Hierdurch durchgreifen die Werkstücke den Rahmen.

Hierdurch ist die Anzahl der am Rahmen anordenbaren Werkstücke steigerbar.

Wenn die hakenartigen Halteabschnitte derart angeordnet sind, dass entweder ein horizontaler Bereich oder ein vertikaler Bereich senkrecht zu der durch den Rahmen aufgespannten Ebene verläuft, sind die an den hakenartigen Halteabschnitten anordenbaren Werkstücke mit ihrer größten Oberfläche im Wesentlichen parallel zur Ebene des Rahmens verlaufend angeordnet.

Darüber hinaus sind Ausführungsformen der Bestückungsvorrichtung denkbar, bei denen zwei benachbarte, am selben Träger ausgeformte, hakenartige Halteabschnitte jeweils bezüglich des Trägers auf einer gegenüberliegenden Seite angeordnet sind. Hierdurch können die Werkstücke links und rechts des Trägers angeordnet werden, wodurch ein Bestückungsdichte der Halteeinrichtung steigerbar ist.

Das Erfassungsmittel kann grundsätzlich beliebig ausgebildet sein, sofern es der technischen Funktion gerecht wird, zumindest die Abmaße des Rahmens und des Werkstücks zu erfassen. Bei Ausführungsformen der Bestückungsvorrichtung ist vorgesehen, dass mindestens eines des mindestens einen Erfassungsmittels mindestens ein manuell betätigbares Eingabemittel umfasst, durch das zumindest die Abmaße des Rahmens und des Werkstücks eingebbar sind und/oder dass mindestens eines des mindestens einen Erfassungsmittels mindestens ein Sensormittel umfasst, durch das zumindest die Abmaße des Rahmens und des Werkstücks automatisch erfassbar sind.

Wenn mindestens eines des mindestens einen Erfassungsmittels mindestens ein manuell betätigbares Eingabemittel umfasst, können die Daten für den Rahmen und das Werkstück manuell eingegeben werden. Hierdurch kann die Bestückungsvorrichtung technisch einfach ausgestaltet werden.

Wenn mindestens eines des mindestens einen Erfassungsmittels mindestens ein Sensormittel umfasst, können die Abmaße des Rahmens und die Werkstücke automatisch erfasst werden. Hierdurch ist ein Automatisierungsgrad der Bestückungsvorrichtung gesteigert und ein Bestücken der Halteeinrichtung, bzw. ein Bereitstellen des den mindestens einen hakenförmigen Halteabschnitt umfassenden Trägers effizienter realisierbar.

Das Erfassungsmittel kann der Steuereinheit funktional zugeordnet sein.

Darüber hinaus erweist es sich als vorteilhaft, wenn die Steuereinheit ein Rechenmittel umfasst, durch das die Abmaße des mindestens einen hakenartigen Halteabschnitts, des Mindestabstands zweier hakenartiger Halteabschnitte sowie der Gesamtlänge des Endlos-Materials berechenbar und/oder wenn die Steuereinheit ein Speichermittel umfasst, in dem die Werte für die Abmaße des mindestens einen hakenartigen Halteabschnitts, des Mindestabstands zweier hakenartiger Halteabschnitte sowie die Gesamtlänge des Endlos-Materials hinterlegt sind.

Wenn die Steuereinheit ein Rechenmittel umfasst, kann diese stets situationsabhängig die notwendigen Daten berechnen.

Wenn die Steuereinheit ein Speichermittel umfasst, in dem die Werte für die Abmaße des mindestens einen hakenartigen Halteabschnitts, des Abstands zweier hakenartigen Halteabschnitte sowie die Gesamtlänge des Endlos-Materials hinterlegt sind, kann die Steuereinheit einfach ausgebildet sein.

Darüber hinaus kann die Steuereinheit sowohl Rechenmittel als auch Speichermittel umfassen und einmal durchgeführte Berechnungen in dem Speichermittel hinterlegen und hierauf zurückgreifen.

Das Endlos-Material kann grundsätzlich beliebig ausgebildet sein, sofern es der Funktion nachkommt, dass der hakenartige Halteabschnitt aus dem Träger ausgeformt werden kann und beim Anordnen des Werkstücks am hakenartigen Halteabschnitt nicht plastisch verformt wird.

Um zu gewährleisten, dass die Werkstücke beim Bearbeiten, insbesondere beim Beschichten, von Strom durchflossen sind, um ein Anhaften von Schichtmittel zu verbessern, erweist es sich als vorteilhaft, wenn die Halteeinrichtung, insbesondere das den Träger und den mindestens einen Halteabschnitt bildende Endlos-Material elektrisch leitend ausgebildet ist und insbesondere ein Metall, wie Eisen, Stahl oder Kupfer, umfasst.

Wenn das den Träger und den mindestens einen Halteabschnitt bildende Endlos-Material elektrisch leitend ausgebildet ist und insbesondere ein Metall umfasst, kann dieses auf einfache Weise durch die Bereitstellungseinrichtung und durch die Verformungseinheit bereitgestellt und verformt werden.

Darüber hinaus sind durch das Ausbilden aus Metall ausreichend hohe Kräfte, bedingt durch die Gewichtskraft der daran anzuordnenden Werkstücke, aufnehmbar.

Um die die mindestens einen hakenartigen Halteabschnitt umfassenden Träger mit Strom durchfließen zu lassen, erweist es sich als vorteilhaft, wenn die Halteeinrichtung, mindestens zwei am gestellartigen Rahmen festgelegte Aufnahmen umfasst, die einem Träger zugeordnet sind, an denen der Träger lösbar festlegbar ist und durch die der Träger beim Festlegen mit einer Stromquelle verbindbar und bestrombar ist.

Darüber hinaus sind Ausführungsformen der Bestückungsvorrichtung denkbar, bei denen die die Halteeinrichtung mindestens zwei Träger umfasst, die im Wesentlichen parallel zueinander verlaufend am gestellartigen Rahmen festlegbar oder festgelegt sind.

Insbesondere, wenn die Halteeinrichtung mindestens zwei Träger umfasst, ist bei Anzahl und Abmaßen der anzuordnenden Werkstücke das Anordnen der hakenartige Halteabschnitte mit den horizontalen Bereichen und vertikalen Bereichen in der Ebene des Rahmens oder quer dazu, entscheidend für die Anzahl der anordenbaren Werkstücke.

Insbesondere, wenn die Halteeinrichtung mindestens zwei Träger umfasst, kann bei einer Weiterbildung der Bestückungsvorrichtung vorgesehen sein, dass durch das Erfassungsmittel der Erfassungseinrichtung ein vertikaler Mindestabstand zwischen zweier hakenartiger Halteabschnitte eines Trägers zum berührungsfreien Anordnen des Werkstücks und/oder ein horizontaler Mindestabstand zwischen zweier hakenartiger Halteabschnitte zweier benachbarter Träger erfassbar ist, wobei der durch die Steuereinheit ermittelte Mindestabstands zweier hakenartiger Halteabschnitte zum berührungsfreien Anordnen des Werkstücks einen vertikalen Mindestabstand zweier Haltabschnitte am selben Träger und einen horizontalen Mindestabstand zweier Halteabschnitte zweier benachbarten Träger umfasst.

Dadurch, dass durch das Erfassungsmittel der Erfassungseinrichtung sowohl ein vertikaler Mindestabstand zwischen zweier hakenartiger Halteabschnitte eines Trägers als auch ein horizontaler Mindestabstand zwischen zweier hakenartiger Halteabschnitte zweier benachbarter Träger erfassbar ist, kann gewährleistet werden, dass die Werkstücke beim Bearbeiten, insbesondere beim Beschichten, nicht einander berühren und hierdurch eine unzureichende oder schlimmstenfalls ausbleibende Beschichtung in Bereichen der Werkstücke erfolgt.

Grundsätzlich ist es denkbar, dass der durch die Bereitstellungseinrichtung hergestellte Träger manuell am Rahmen festgelegt wird. Der Automatisierungsgrad der Bestückungsvorrichtung lässt sich steigern, wenn die Bestückungsvorrichtung mindestens eine Handlingeinheit umfasst, die mindestens ein Bereitstellungs-Handlingmittel umfasst, durch das der durch die Bereitstellungseinrichtung hergestellte Träger an der Bereitstellungeinrichtung aufnehmbar und an dem Rahmen der Halteeinrichtung anordenbar ist.

Darüber hinaus ist es denkbar, dass die Werkstücke durch Bedienpersonal manuell an den hakenartigen Trageabschnitten angeordnet werden. Der Automatisierungsgrad lässt sich weiter steigern, wenn die Handlingeinheit mindestens eine Bestückungs-Handlingmittel umfasst, durch das ein Werkstück aufnehmbar und an einem Halteabschnitt eines am Rahmen festgelegten Trägers anordenbar ist und/oder durch das eine mit mindestens einem Werkstück bestückte Halteeinrichtung an eine Beschichtungsanlage übergebbar ist.

Ferner lässt sich der Automatisierungsgrad der Bestückungsvorrichtung weiter erhöhen, wenn die Bestückungsvorrichtung mindestens ein Zuführmittel umfasst, auf dem Werkstücke ablegbar, der Handlingeinheit zuführbar und durch das Bestückungs-Handlingmittel greifbar sind.

Darüber hinaus wird die Aufgabe gelöst durch eine Beschichtungsanlage zum Beschichten von Werkstücken, mit mindestens einer Bestückungsvorrichtung mit mindestens einen der zuvor genannten Merkmale, mit einem Fördersystem zum Transportieren der mindestens einen mit Werkstücken bestückten Halteeinrichtung der Bestückungsvorrichtung, mit einer Beschichtungseinheit, in der eine durch das Fördersystem zugeführte mit Werkstücken bestückte Halteeinrichtung mit Schichtmittel beschichtbar ist, mit eine Wärmeeinheit, die der Beschichtungseinheit nachgeordnet ist und in der das Schichtmittel aushärtbar ist, und mit mindestens einer Entladeeinrichtung, zum Entfernen der Halteeinrichtung vom Fördersystem und zum Entfernen der Werkstücke von der Halteeinrichtung.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Bestückungsvorrichtung und der Beschichtungsanlage.

In der Zeichnung zeigt:
- Figur 1: Eine schematische Draufsicht auf ein Ausführungsbeispiel einer erfindungsgemäßen Bestückungsvorrichtung;
- Figur 2: Eine schematische Draufsicht auf eine Verformungseinheit der Bestückungsvorrichtung in unterschiedlichen Prozessabschnitten der Verformung;
- Figur 3: Eine schematische Draufsicht auf ein Ausführungsbeispiel einer erfindungsgemäßen Beschichtungsanlage.

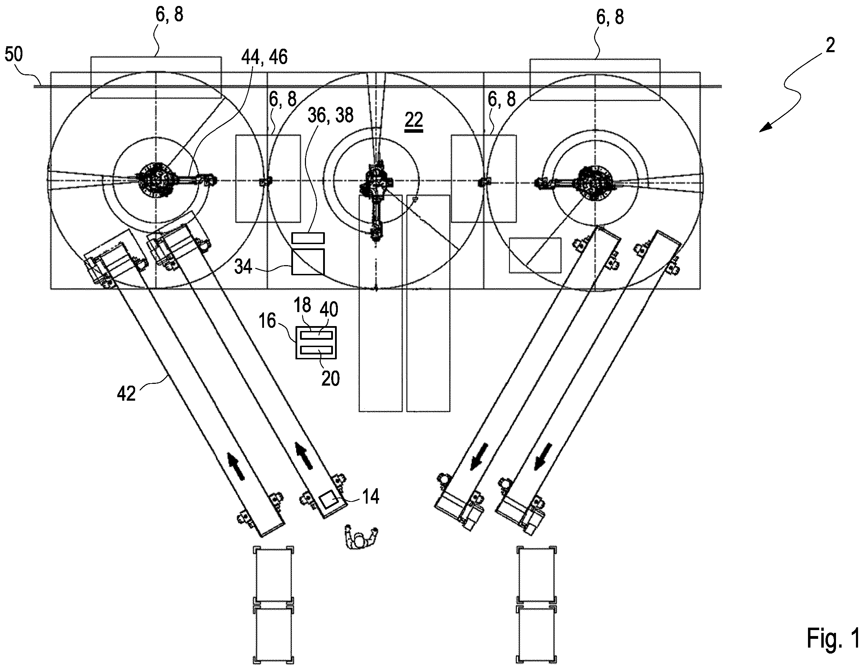

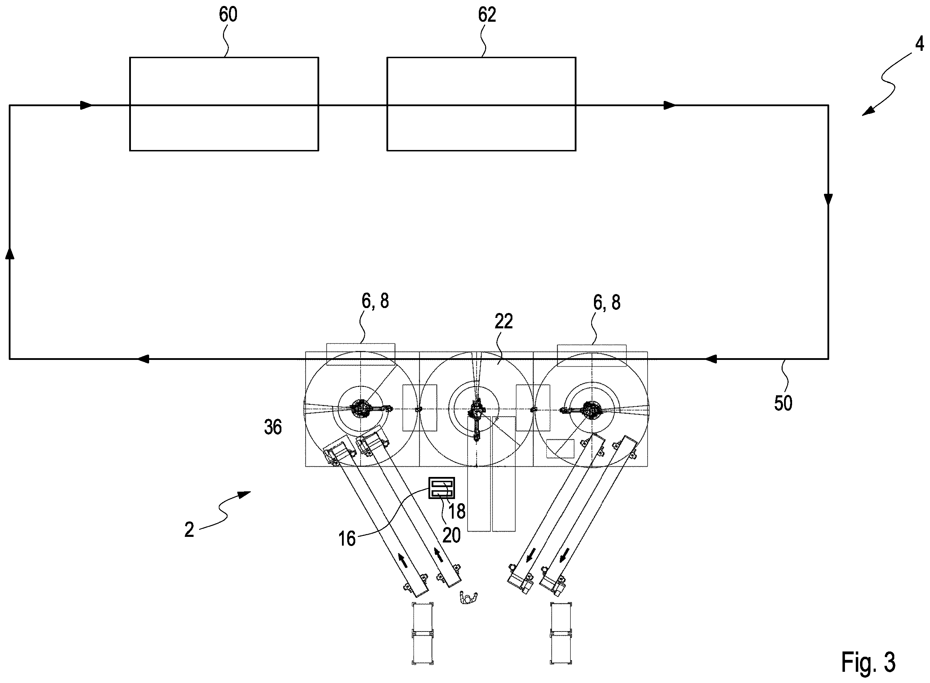

Figur 1 zeigt eine insgesamt mit dem Bezugszeichen 2 versehene Bestückungsvorrichtung für eine Beschichtungsanlage 4 (Figur 3). Die Bestückungsvorrichtung 2 umfasst Halteeinrichtungen 6, die in Figur 1 und Figur 3 nur schematisch dargestellt sind und die jeweils mindestens einen gestellartigen Rahmen 8 und mindestens einen am Rahmen 8 aus einem stangen- oder drahtartigen Endlos-Material gefertigten Träger 10 umfassen.

Die aus dem drahtartigen Endlos-Material gefertigten Träger 10 sind mit beiden Enden am Rahmen 8 festgelegt. An den Trägern 10 sind hakenartige Halteabschnitte 12 ausgeformt. An den hakenartigen Halteabschnitten 12 ist ein zu bearbeitendes Werkstück 14 anordenbar. Darüber hinaus umfasst die Bestückungsvorrichtung 2 eine Erfassungseinrichtung 16, die ein Erfassungsmittel 18 umfasst, durch das zumindest die Abmaße des Rahmens 8 und des Werkstücks 14 erfassbar sind.

Ferner umfasst die Erfassungseinrichtung 16 eine Steuereinheit 20, durch die auf Grundlage der Abmaße des Rahmens 8 und des Werkstücks 14 die Abmaße des mindestens einen hakenartigen Halteabschnitts 12 des Trägers 10 zum berührungsfreien Anordnen des Werkstücks 14 sowie durch die die Gesamtlänge des Endlos-Materials zum Ausformen des Trägers 10 ermittelbar ist.

Weiter umfasst die Bestückungsvorrichtung 2 eine mit der Erfassungseinrichtung 16 funktional zusammenwirkende Bereitstellungseinrichtung 22. Durch die Bereitstellungseinrichtung 22 ist der Träger 10 herstellbar.

Die Bereitstellungseinrichtung 22 umfasst einen Endlos-Materialträger 34, der das den Träger 10 bildende Endlos-Material bereitstellt. Ferner umfasst die Bereitstellungseinrichtung 22 eine Verformungseinheit 36, durch die ein hakenartiger Halteabschnitt 12 durch ein bereichsweises plastisches Verformen des bereitgestellten Endlos-Materials nach Maßgabe der ermittelten Abmaße und des ermittelten Mindestabstands formbar ist. Ferner umfasst die Verformungseinheit 36 ein Ablängmittel 38, durch dass das bereitgestellte Endlos-Material mit Erreichen der Gesamtlänge von verbleibendem Endlos-Materialträger 34 trennbar ist.

Figur 1 zeigt eine Ausführungsform der Bestückungsvorrichtung 2, bei der das Erfassungsmittel 18 der Erfassungseinrichtung 16 ein Sensormittel 40 umfasst. Um Werkstücke 14 an die Halteeinrichtung 6 zu transportieren, umfasst die Bestückungsvorrichtung 2 ein Zuführmittel 42, auf dem Werkstücke 14 ablegbar und der Halteeinrichtung 6 zuführbar sind. Zum Anordnen der bei der Halteeinrichtung 6 eingehenden Werkstücke 14 umfasst die Bestückungsvorrichtung 2 eine Handlingeinheit 44, die ein Bestückungs-Handlingmittel 46 umfasst, durch das ein Werkstück 14 aufnehmbar und an einem Halteabschnitt 12 eines am Rahmen 8 festgelegten Trägers 10 anordenbar ist.

Darüber hinaus umfasst die Handlingeinheit 44 ein Bereitstellungs-Handlingmittel 48, durch das der durch die Bereitstellungseinrichtung 22 hergestellte Träger 10 an der Bereitstellungseinrichtung 22 aufnehmbar und an dem Rahmen 8 an der Halteeinrichtung 6 anordenbar ist.

Bei dem in Figur 1 gezeigten Ausführungsbeispiel ist der Rahmen 8 der Halteeinrichtung 6 durch das Bestückungs-Handlingmittel 46 aufgenommen und an einem Fördersystem 50 der Beschichtungsanlage 4 angeordnet.

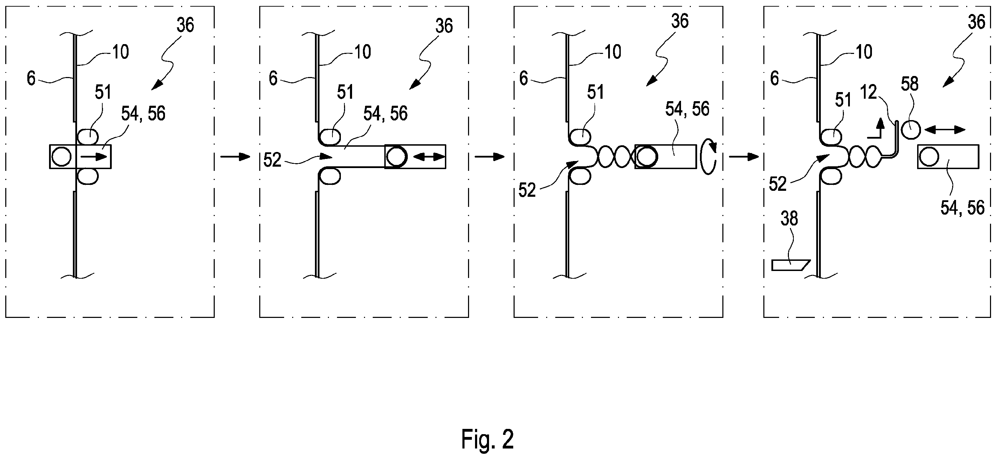

Figur 2 zeigt ein Endlos-Material beim Herstellen eines Trägers 10 durch die Bereitstellungseinrichtung 22. Die Verformungseinheit 36 der Bereitstellungseinrichtung 22 umfasst ein Anlagemittel 51, das parallel zur Erstreckungsrichtung des bereitgestellten Endlos-Materials angeordnet ist. Das Anlagemittel 51 umfasst eine durchgehende Öffnung 52.

Darüber hinaus umfasst die Verformungseinheit 36 ein Zugmittel 54, dass das bereitgestellte Endlos-Material auf einer dem Anlagemittel 51 abgewandten Seiten hintergreift und quer oder schräg zur Erstreckungsrichtung des bereitgesteliten Endlos-Materials dem zu bildenden hakenartigen Halteabschnitt 12 durch die Öffnung 52 überführt.

Darüber hinaus umfasst die Verformungseinheit 36 ein Verdrillungsmittel 56, durch das der durch die Öffnung 52 des Anlagemittel 51 überführte zu bildende hakenartige Halteabschnitt 12 verdrillbar ist.

Schließlich umfasst die Verformungseinheit 36 ein Biegemittel 58, durch das der durch die Öffnung 52 des Anlagemittels 51 überführte zu bildende hakenartige Halteabschnitt 12 durch Biegen verformbar ist.

Figur 3 zeigt eine Beschichtungsanlage 4. Die dort gezeigten Elemente der Bestückungsvorrichtung 2 entsprechen der Darstellung gemäß Figur 1, weshalb auf die dort dargestellten Erläuterungen und Bezugszeichen verwiesen wird. Die Beschichtungsanlage 4 umfasst eine Beschichtungseinheit 60, in der durch das Fördersystem 50 zugeführte Werkstücke 14 mit Schichtmittel beschichtet werden.

Aus der Beschichtungseinheit 60 werden die beschichteten Werkstücke 14, insbesondere die Halteeinrichtung 6, an der die Werkstücke 14 an den hakenartigen Halteabschnitten 12 der Träger 10, die an dem Rahmen 8 der Halteeinrichtung 6 festgelegt sind, an eine Wärmeeinheit 62 durch das Fördersystem 50 überführt. Dort härten die Schichtmittel aus.

Hieran anschließend transportiert das Fördersystem 50 die Halteeinrichtung 6 an eine Entladeeinrichtung 64, an der die Halteeinrichtung 6 vom Fördersystem 50 entfernt wird und an der die beschichteten Werkstücke 14 von der Halteeinrichtung 6 entfernt werden.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Bestückungsvorrichtung
- 4: Beschichtungsanlage
- 6: Halteeinrichtung
- 8: Rahmen
- 10: Träger
- 12: Halteabschnitt
- 14: Werkstück
- 16: Erfassungseinrichtung
- 18: Erfassungsmittel
- 20: Steuereinheit
- 22: Bereitstellungseinrichtung
- 34: Endlos-Materialträger
- 36: Verformungseinheit
- 38: Ablängmittel
- 40: Sensormittel
- 42: Zuführmittel
- 44: Handlingeinheit
- 46: Bestückungs-Handlingmittel
- 48: Bereitstellungs-Handlingmittel
- 50: Fördersystem
- 51: Anlagemittel
- 52: Öffnung
- 54: Zugmittel
- 56: Verdrillungsmittel
- 58: Biegemittel
- 60: Beschichtungseinheit
- 62: Wärmeeinheit
- 64: Entladeeinrichtung

## Patentansprüche

1. Bestückungsvorrichtung (2) für eine Beschichtungsanlage (4) mit mindestens einer Halteeinrichtung (6), die mindestens einen gestellartigen Rahmen (8) und mindestens einen aus einem stangen- oder drahtartigen Endlos-Material gefertigten Träger (10) umfasst, der mit mindestens einem Ende am Rahmen (8) festlegbar oder festgelegt ist und an dem mindestens ein hakenartiger Halteabschnitt (12) ausgeformt ist, an dem ein zu bearbeitendes Werkstück (14) anordenbar ist, mit mindestens einer Erfassungseinrichtung (16), die ein Erfassungsmittel (18), durch das zumindest die Abmaße des Rahmens (8) und des Werkstücks (14) erfassbar sind, und die mindestens eine Steuereinheit (20) umfasst, durch die auf Grundlage der Abmaße des Rahmens (8) und des Werkstücks (14) die Abmaße des mindestens einen hakenartigen Halteabschnitts (12) und eines Mindestabstands zweier hakenartiger Halteabschnitte (12) des Trägers (10) zum berührungsfreien Anordnen des Werkstücks (14) sowie durch die die Gesamtlänge des Endlos-Materials zum Ausformen des Trägers (10) ermittelbar ist, und mit mindestens einer mit der Erfassungseinrichtung (16) funktional zusammenwirkenden Bereitstellungseinrichtung (22), durch die der Träger (10) herstellbar ist, die einen Endlos-Materialträger (34), der das den Träger (10) bildende Endlos-Material bereitstellt, die eine Verformungseinheit (36), durch die ein hakenartiger Halteabschnitt (12) durch ein bereichsweises plastisches Verformen des bereitgestellten Endlos-Materials nach Maßgabe der ermittelten Abmaße und des ermittelten Mindestabstands formbar ist, und die ein Ablängmittel (38) umfasst, durch das das bereitgestellte Endlos-Material mit Erreichen der Gesamtlänge vom verbleibenden Endlos-Materialträger (34) trennbar ist.

2. Bestückungsvorrichtung (2) nach Anspruch 1, **dadurch gekennzeichnet, dass** der Träger (10) und der mindestens eine hakenartige Halteabschnitt (12) ein gemeinsames einstückiges Bauteil bilden.

3. Bestückungsvorrichtung (2) nach Anspruch 1 oder 2, **dadurch gekennzeichnet, dass** die mindestens eine Verformungseinheit (36) der Bereitstellungseinrichtung (22) ein Anlagemittel (51) umfasst, das parallel zur Erstreckungsrichtung des bereitgestellten Endlos-Materials angeordnet ist und das eine durchgehende Öffnung (52) umfasst, und dass die mindestens eine Verformungseinheit (36) der Bereitstellungseinrichtung (22) ein Zugmittel (54) umfasst, das das bereitgestellte Endlos-Materials auf einer dem Anlagemittel (51) abgewandten Seite hintergreift und quer oder schräg zur Erstreckungsrichtung des bereitgestellten Endlos-Materials den zu bildenden hakenartigen Halteabschnitt (12) durch die Öffnung (52) überführt.

4. Bestückungsvorrichtung (2) nach Anspruch 3, **dadurch gekennzeichnet, dass** die mindestens eine Verformungseinheit (36) der Bereitstellungseinrichtung (22) mindestens ein Verdrillungsmittel (56) umfasst, durch das der durch die Öffnung (52) des Anlagemittels (51) überführte zu bildende hakenartige Halteabschnitt (12) durch Verdrillen plastische verformbar ist und/oder dass die mindestens eine Verformungseinheit (36) der Bereitstellungseinrichtung (22) mindestens ein Biegemittel (58) umfasst, durch das der durch die Öffnung (52) des Anlagemittels (51) überführte zu bildende hakenartige Halteabschnitt (12) durch Biegen verformbar ist.

5. Bestückungsvorrichtung (2) nach einem der vorhergehenden Ansprüche, **dadurch gekennzeichnet, dass** mindestens einer des mindestens einen am Träger (10) ausgeformten hakenartigen Halteabschnitts (12) in der am Rahmen (8) festgelegten Anordnung des Trägers (10) einen horizontalen Bereich, der in den Träger (10) mündet, und einen vertikalen Bereich umfasst, der in den horizontalen Bereich mündet und auf der dem horizontalen Bereich abgewandten Seite ein freies Ende zum Anordnen des Werkstücks (14) aufweist, wobei der hakenartige Halteabschnitt (12) sowohl mit dem horizontalen Bereich als auch mit dem vertikalen Bereich parallel zu einer durch den Rahmen (8) aufgespannten Ebene verlaufend angeordnet ist, oder wobei der hakenartige Halteabschnitt (12) mit dem horizontalen Bereich oder mit dem vertikalen Bereich senkrecht zu einer durch den Rahmen (8) aufgespannten Ebene verlaufend angeordnet ist.

6. Bestückungsvorrichtung (2) nach einem der vorhergehenden Ansprüche, **dadurch gekennzeichnet, dass** mindestens eines des mindestens einen Erfassungsmittels (18) mindestens ein manuell betätigbares Eingabemittel umfasst, durch das zumindest die Abmaße des Rahmens (8) und des Werkstücks (14) eingebbar sind und/oder dass mindestens eines des mindestens einen Erfassungsmittels (18) mindestens ein Sensormittel (40) umfasst, durch das zumindest die Abmaße des Rahmens (8) und des Werkstücks (14) automatisch erfassbar sind.

7. Bestückungsvorrichtung (2) nach einem der vorhergehenden Ansprüche, **dadurch gekennzeichnet, dass** die Steuereinheit (20) ein Rechenmittel umfasst, durch das die Abmaße des mindestens einen hakenartigen Halteabschnitts (12), des Mindestabstands zweier hakenartiger Halteabschnitte (12) sowie der Gesamtlänge des Endlos-Materials berechenbar und/oder dass die Steuereinheit (20) ein Speichermittel umfasst, in dem die Werte für die Abmaße des mindestens einen hakenartigen Halteabschnitts (12), des Mindestabstands zweier hakenartiger Halteabschnitte (12) sowie die Gesamtlänge des Endlos-Materials hinterlegt sind.

8. Bestückungsvorrichtung (2) nach einem der vorhergehenden Ansprüche, **dadurch gekennzeichnet, dass** die Halteeinrichtung (6), insbesondere das den Träger (10) und den mindestens einen Halteabschnitt (12) bildende Endlos-Material, elektrisch leitend ausgebildet ist und insbesondere ein Metall, wie Eisen, Stahl oder Kupfer, umfasst.

9. Bestückungsvorrichtung (2) nach einem der vorhergehenden Ansprüche, **dadurch gekennzeichnet, dass** die Halteeinrichtung (6), mindestens zwei am gestellartigen Rahmen (8) festgelegte Aufnahmen umfasst, die einem Träger (10) zugeordnet sind, an denen der Träger (10) lösbar festlegbar ist und durch die der Träger (10) beim Festlegen mit einer Stromquelle verbindbar und bestrombar ist.

10. Bestückungsvorrichtung (2) nach einem der vorhergehenden Ansprüche, **dadurch gekennzeichnet, dass** die die Halteeinrichtung (6) mindestens zwei Träger (10) umfasst, die im Wesentlichen parallel zueinander verlaufend am gestellartigen Rahmen (8) festlegbar oder festgelegt sind.

11. Bestückungsvorrichtung (2) nach einem der vorhergehenden Ansprüche, **dadurch gekennzeichnet, dass** durch das Erfassungsmittel (18) der Erfassungseinrichtung (16) ein vertikaler Mindestabstand zwischen zweier hakenartiger Halteabschnitte (12) eines Trägers (10) zum berührungsfreien Anordnen des Werkstücks (14) und/oder ein horizontaler Mindestabstand zwischen zweier hakenartiger Halteabschnitte (12) zweier benachbarter Träger (10) erfassbar ist, wobei der durch die Steuereinheit (20) ermittelte Mindestabstands zweier hakenartiger Halteabschnitte (12) zum berührungsfreien Anordnen des Werkstücks (14) einen vertikalen Mindestabstand zweier Haltabschnitte (12) am selben Träger (10) und einen horizontalen Mindestabstand zweier Halteabschnitte (12) zweier benachbarten Träger (10) umfasst.

12. Bestückungsvorrichtung (2) nach einem der vorhergehenden Ansprüche, **gekennzeichnet durch** mindestens eine Handlingeinheit (44), die mindestens ein Bereitstellungs-Handlingmittel (48) umfasst, durch das der durch die Bereitstellungseinrichtung (22) hergestellte Träger (10) an der Bereitstellungeinrichtung (22) aufnehmbar und an dem Rahmen (8) der Halteeinrichtung (6) anordenbar ist.

13. Bestückungsvorrichtung (2) nach Anspruch 12, **dadurch gekennzeichnet, dass** die Handlingeinheit (44) mindestens ein Bestückungs-Handlingmittel (46) umfasst, durch das ein Werkstück (14) aufnehmbar und an einem Halteabschnitt (12) eines am Rahmen (8) festgelegten Trägers (10) anordenbar ist und/oder durch das eine mit mindestens einem Werkstück (14) bestückte Halteeinrichtung (6) an eine Beschichtungsanlage (4) übergebbar ist.

14. Bestückungsvorrichtung (2) nach einem der vorhergehenden Ansprüche **gekennzeichnet durch** mindestens ein Zuführmittel (42), auf dem Werkstücke (14) ablegbar, der Handlingeinheit (44) zuführbar und durch das Bestückungs-Handlingmittel (46) greifbar sind.

15. Beschichtungsanlage (4) zum Beschichten von Werkstücken (14), mit einer Bestückungsvorrichtung (2) nach einem der Ansprüche 1 bis 14, mit einem Fördersystem (50) zum Transportieren der mindestens einen mit Werkstücken (14) bestückten Halteeinrichtung (6) der Bestückungsvorrichtung (2), mit einer Beschichtungseinheit (60), in der eine durch das Fördersystem (50) zugeführte mit Werkstücken (14) bestückte Halteeinrichtung (6) mit Schichtmittel beschichtbar ist, mit eine Wärmeeinheit (62), die der Beschichtungseinheit (60) nachgeordnet ist und in der das Schichtmittel aushärtbar ist, und mit mindestens einer Entladeeinrichtung (64), zum Entfernen der Halteeinrichtung (6) vom Fördersystem (50) und zum Entfernen der Werkstücke (14) von der Halteeinrichtung (6).

## Claims

1. Loading device (2) for a coating system (4) with at least one holding device (6) which comprises at least one rack-like frame (8) and at least one carrier (10) made of a rod-like or wire-like continuous material, which can be or is secured with one end to the frame (8) and on which at least one hook-like holding section (12) is formed, on which a workpiece (14) to be coated can be arranged, with at least one detection device (16) which comprises a detection means (18), by which at least the dimensions of the frame (8) and of the workpiece (14) can be detected, and which comprises at least one control unit (20), by which, on the basis of the dimensions of the frame (8) and the workpiece (14), the dimensions of the at least one hook-like holding section (12) and of a minimum distance between two hook-like holding sections (12) on the carrier (10) for contact-free arrangement of the workpiece (14) and by which the total length of the continuous material for forming the carrier (10) can be determined, and with at least one provisioning device (22) which interacts functionally with the detection device (16), by which the carrier (10) can be produced, which provides a continuous material carrier (34), which provides the continuous material forming the carrier (10), which provides a deformation unit (36), by which a hook-like holding section (12) can be moulded by a region-wise plastic deformation of the provided continuous material in accordance with the determined dimensions and the determined minimum distance, and which provides a cutting means (38), with which the provided continuous material can be cut once the total length of the remaining continuous material carrier (34) is achieved.

2. Loading device (2) according to claim 1, **characterised in that** the carrier (10) and the at least one hook-like holding section (12) form a common one-piece component.

3. Loading device (2) according to claim 1 or 2, **characterised in that** the at least one deformation unit (36) of the provisioning device (22) comprises a contact means (51) which is arranged parallel to the direction of extension of the continuous material provided and which comprises a continuous opening (52), and **in that** the at least one deforming unit (36) of the provisioning device (22) comprises a pulling means (54) which engages behind the continuous material provided on a side facing away from the contact means (51) and transfers the hook-like holding section (12) to be formed through the opening (52) transversely or obliquely to the direction of extension of the continuous material provided.

4. Loading device (2) according to claim 3, **characterised in that** the at least one deformation unit (36) of the provisioning device (22) comprises at least one twisting means (56), by means of which the hook-like holding section (12) to be formed, which is transferred through the opening (52) of the contact means (51), can be plastically deformed by twisting and/or **in that** the at least one deformation unit (36) of the provisioning device (22) comprises at least one bending means (58) by means of which the hook-like holding section (12) to be formed, which is transferred through the opening (52) of the contact means (51), can be deformed by bending.

5. Loading device (2) according to one of the preceding claims, **characterised in that** at least one of the at least one hook-like holding section (12) formed on the carrier (10) comprises, in the arrangement of the carrier (10) fixed to the frame (8), a horizontal region which opens into the carrier (10), and a vertical region which opens into the horizontal region and has a free end for arranging the workpiece (14) on the side facing away from the horizontal region, wherein the hook-like holding section (12) is arranged with both the horizontal region and the vertical region extending parallel to a plane spanned by the frame (8), or wherein the hook-like holding section (12) is arranged with the horizontal region or with the vertical region extending perpendicular to a plane spanned by the frame (8).

6. Loading device (2) according to one of the preceding claims, **characterised in that** at least one of the at least one detection means (18) comprises at least one manually operable input means, by which at least the dimensions of the frame (8) and of the workpiece (14) can be entered and/or **in that** at least one of the at least one detection means (18) comprises at least one sensor means (40), by which at least the dimensions of the frame (8) and of the workpiece (14) can be detected automatically.

7. Loading device (2) according to one of the preceding claims, **characterised in that** the control unit (20) comprises a calculating means by means of which the dimensions of the at least one hook-like holding section (12) of the minimum distance between two hook-like holding sections (12) and the total length of the continuous material can be calculated and/or **in that** the control unit (20) comprises a memory means in which the values for the dimensions of the at least one hook-like holding section (12), the minimum distance between two hook-like holding sections (12) and the total length of the continuous material are stored.

8. Loading device (2) according to one of the preceding claims, **characterised in that** the holding device (6), in particular the continuous material forming the carrier (10) and the at least one holding section (12), is electrically conductive and in particular comprises a metal, such as iron, steel or copper.

9. Loading device (2) according to one of the preceding claims, **characterised in that** the holding device (6) comprises at least two receptacles which are fixed to the rack-like frame (8) and are assigned to a carrier (10), to which the carrier (10) can be detachably fixed and through which the carrier (10) can be connected to a power source and energised when fixed.

10. Loading device (2) according to one of the preceding claims, **characterised in that** the holding device (6) comprises at least two carriers (10) which can be fixed or are fixed to the rack-like frame (8) running essentially parallel to one another.

11. Loading device (2) according to one of the preceding claims, **characterised in that** a vertical minimum distance between two hook-like holding sections (12) of a carrier (10) for contact-free arrangement of the workpiece (14) and/or a horizontal minimum distance between two hook-like holding sections (12) of two adjacent carriers (10) can be detected by the detection means (18) of the detection device (16), wherein the minimum distance determined by the control unit (20) between two hook-like holding sections (12) for the contact-free arrangement of the workpiece (14) comprises a vertical minimum distance between two holding sections (12) on the same carrier (10) and a horizontal minimum distance between two holding sections (12) of two neighbouring carriers (10).

12. Loading device (2) according to one of the preceding claims, **characterised by** at least one handling unit (44), which comprises at least one loading-handling means (48), by means of which the carrier (10) produced by the provisioning device (22) can be picked up at the provisioning device (22) and can be arranged on the frame (8) of the holding device (6).

13. Loading device (2) according to claim 12, **characterised in that** the handling unit (44) comprises at least one loading-handling means (46), by means of which a workpiece (14) can be picked up and arranged on a holding section (12) of a carrier (10) fixed to the frame (8) and/or by means of which a holding device (6) loaded with at least one workpiece (14) can be transferred to a coating system (4).

14. Loading device (2) according to one of the preceding claims, **characterised by** at least one feed means (42), on which workpieces (14) can be deposited, fed to the handling unit (44) and gripped by the loading-handling means (46).

15. Coating system (4) for coating workpieces (14), having a loading device (2) according to one of claims 1 to 14, having a conveyor system (50) for transporting the at least one holding device (6), loaded with workpieces (14), of the loading device (2), having a coating unit (60), in which a holding device (6) loaded with workpieces (14) and fed by the conveyor system (50) can be coated with coating agent, with a heating unit (62) which is arranged downstream of the coating unit (60) and in which the coating agent can be cured, and with at least one unloading device (64) for removing the holding device (6) from the conveyor system (50) and for removing the workpieces (14) from the holding device (6).

## Revendications

1. Dispositif de positionnement (2) pour une machine de revêtement (4) avec au moins un dispositif de retenue (6), qui comprend au moins un cadre (8) en forme de bâti et au moins un support (10) à base de matériau sans fin en forme de barre ou de fil, qui peut être fixé ou est fixé par au moins un embout au cadre (8) et sur lequel est formé au moins une section de retenue (12) en forme de crochet, sur laquelle peut être disposée une pièce à usiner (14) qui doit être traitée, avec au moins un dispositif de détection (16), qui comprend un moyen de détection (18), par lequel au moins les dimensions du cadre (8) et de la pièce à usiner (14) peuvent être détectées, et qui comprend au moins une unité de commande (20), par laquelle peuvent être déterminées, selon les dimensions du cadre (8) et de la pièce à usiner (14), les dimensions de ladite au moins une section de retenue (12) en forme de crochet et une distance minimale entre deux sections de retenue (12) en forme de crochet du support (10) pour la mise en place sans contact de la pièce à usiner (14), ainsi que par laquelle peut être déterminée la longueur totale du matériau sans fin pour le formage du support (10), et avec au moins un dispositif de préparation (22) agissant simultanément avec le dispositif de détection (16), par lequel le support (10) peut être fabriqué, qui prépare un support de matériau sans fin (34), qui prépare le matériau sans fin formant le support (10), qui prépare un dispositif de formage (36), par laquelle une section de retenue (12) en forme de crochet peut être formée par un formage plastique par zones du matériau sans fin préparé en fonction des dimensions déterminées et de la distance minimale déterminée, et qui comprend une découpe à longueur (38) par lequel le matériau sans fin préparé peut être séparé du support de matériau sans fin (34) restant lorsque la longueur totale est atteinte.

2. Dispositif de positionnement (2) selon la revendication 1, **caractérisé en ce que** le support (10) et ladite au moins une section de retenue (12) en forme de crochet forment un composant commun d'une seule pièce.

3. Dispositif de positionnement (2) selon la revendication 1 ou 2, **caractérisé en ce que** ladite au moins un dispositif de formage (36) du dispositif de préparation(22) comprend un moyen d'application (51) qui est disposé parallèlement au sens d'extension du matériau sans fin préparé et qui comprend une ouverture (52) traversante, et **en ce que** ladite au moins un dispositif de formage (36) du dispositif de préparation (22) comprend un moyen de traction (54) qui saisit par l'arrière le matériau sans fin préparé sur un côté opposé au moyen d'application (51) et transfère transversalement ou obliquement par rapport au sens d'extension du matériau sans fin préparé la section de retenue (12) en forme de crochet à former à travers l'ouverture (52).

4. Dispositif de positionnement (2) selon la revendication 3, **caractérisé en ce que** ladite au moins un dispositif de formage (36) du dispositif de préparation (22) comprend au moins un moyen de torsion (56), par lequel la section de retenue (12) en forme de crochet à former, transférée à travers l'ouverture (52) du moyen d'application (51), peut faire l'objet d'un formage plastique par torsion et/ou **en ce que** ladite au moins un dispositif de formage (36) du dispositif de préparation (22) comprend au moins un moyen de cintrage (58) par lequel la section de retenue (12) en forme de crochet à former, transférée à travers l'ouverture (52) du moyen d'application (51), peut faire l'objet de formage par cintrage.

5. Dispositif de positionnement (2) selon l'une des revendications précédentes, **caractérisé en ce qu'**au moins l'une de ladite au moins une section de retenue (12) en forme de crochet formée sur le support (10) comprend, dans la disposition du support (10) fixée au cadre (8), une zone horizontale qui débouche dans le support (10) et une zone verticale qui débouche dans la zone horizontale et qui présente, du côté opposé à la zone horizontale, une extrémité libre pour le montage de la pièce à usiner (14), la section de retenue (12) en forme de crochet étant disposée de manière à s'étendre parallèlement à un plan tendu par le cadre (8), aussi bien avec la zone horizontale qu'avec la zone verticale, ou la section de retenue (12) en forme de crochet étant disposée de manière à s'étendre perpendiculairement à un plan tendu par le cadre (8), avec la zone horizontale ou avec la zone verticale.

6. Dispositif de positionnement (2) selon l'une des revendications précédentes, **caractérisé en ce qu'**au moins dudit au moins un moyen de détection (18) comprend au moins un moyen d'entrée à actionnement manuel, par lequel au moins les dimensions du cadre (8) et de la pièce à usiner (14) peuvent être entrées et/ou **en ce qu'**au moins un dudit au moins un moyen de détection (18) comprend au moins un capteur (40), par lequel au moins les dimensions du cadre (8) et de la pièce à usiner (14) peuvent être détectées automatiquement.

7. Dispositif de positionnement (2) selon l'une des revendications précédentes, **caractérisé en ce que** l'unité de commande (20) comprend un moyen de calcul permettant de déterminer les dimensions d'au moins une section de retenue (12) en forme de crochet, de la distance minimale de deux sections de retenue (12) en forme de crochet ainsi que de la longueur totale du matériau sans fin et/ou **en ce que** l'unité de commande (20) comprend un moyen de mémorisation dans lequel sont enregistrées les valeurs pour les dimensions de ladite au moins une section de retenue (12) en forme de crochet, de la distance minimale de deux sections de retenue (12) en forme de crochet ainsi que de la longueur totale du matériau sans fin.

8. Dispositif de positionnement (2) selon l'une des revendications précédentes, **caractérisé en ce que** le dispositif de retenue (6), en particulier le matériau sans fin formant le support (10) et ladite au moins une section de retenue (12), est réalisé de manière à faire office de conducteur électrique et comprend en particulier un métal tel que du fer, de l'acier ou du cuivre.

9. Dispositif de positionnement (2) selon l'une des revendications précédentes, **caractérisé en ce que** le dispositif de retenue (6) comprend au moins deux logements fixés sur le cadre (8) en forme de bâti, qui sont associés à un support (10), sur lesquels le support (10) peut être fixé de manière amovible et par lesquels le support (10) peut être relié à une source de courant et être alimenté en courant lors de la fixation.

10. Dispositif de positionnement (2) selon l'une des revendications précédentes, **caractérisé en ce que** le dispositif de retenue (6) comprend au moins deux supports (10) qui peuvent être fixés ou sont fixés au cadre (8) en forme de bâti en s'étendant en grande partie parallèlement l'un à l'autre.

11. Dispositif de positionnement (2) selon l'une des revendications précédentes, **caractérisé en ce que** le moyen de détection (18) du dispositif de détection (16) permet de détecter une distance minimale verticale entre deux sections de retenue (12) en forme de crochets d'un support (10) pour la mise en place sans contact de la pièce à usiner (14) et/ou une distance minimale horizontale entre deux sections de retenue (12) en forme de crochets de deux supports (10) voisins, la distance minimale entre deux sections de retenue (12) en forme de crochet pour la disposition sans contact de la pièce à usiner (14), déterminée par l'unité de commande (20), comprenant une distance minimale verticale entre deux sections de retenue (12) sur le même support (10) et une distance minimale horizontale entre deux sections de retenue (12) de deux supports (10) adjacents.

12. Dispositif de positionnement (2) selon l'une des revendications précédentes, **caractérisé par** au moins une unité de manutention (44) qui comprend au moins un moyen de manutention de préparation (48) par lequel le support (10) fabriqué par le dispositif de préparation (22) peut être reçu sur le dispositif de préparation (22) et être disposé sur le cadre (8) du dispositif de retenue (6).

13. Dispositif de positionnement (2) selon la revendication 12, **caractérisé en ce que** l'unité de manutention (44) comprend au moins un moyen de manutention pour le positionnement (46), par lequel une pièce à usiner (14) peut être prélevée et disposée sur une section de retenue (12) d'un support (10) fixé au cadre (8) et/ou par lequel un dispositif de retenue (6) équipé d'au moins une pièce à usiner (14) peut être transféré à une machine de revêtement (4).

14. Dispositif de positionnement (2) selon l'une des revendications précédentes, **caractérisé par** au moins un moyen d'amenée (42) sur lequel des pièces à usiner (14) peuvent être déposées, amenées à l'unité de manutention (44) et saisies par le moyen de manutention pour le positionnement (46).

15. Machine de revêtement (4) pour revêtir des pièces à usiner (14), avec un dispositif de positionnement (2) selon l'une des revendications 1 à 14, avec un système de transport (50) pour transporter ledit au moins un dispositif de retenue (6) du dispositif de positionnement (2) équipé de pièces à usiner (14), avec une unité de revêtement (60), dans laquelle un dispositif de retenue (6) équipé de pièces à usiner (14) et amené par le système de transport (50) peut être revêtu d'un agent de revêtement, avec une unité de chauffage (62) qui est disposée en aval de l'unité de revêtement (60) et dans laquelle l'agent de stratification peut être durci, et avec au moins un dispositif de déchargement (64) pour enlever le dispositif de retenue (6) du système de transport (50) et pour enlever les pièces à usiner (14) du dispositif de retenue (6).
